# FASCICULE DE BREVET EUROPEEN

(11) **EP 3 555 975 B1**
(45) Date de publication et mention de la délivrance du brevet: **20.04.2022**
(21) Numéro de dépôt: 17828947.6
(22) Date de dépôt: 15.12.2017
(51) Int. Cl.: H02G 3/34

(54) **SYSTÈME COMPORTANT UN RAIL PORTEUR ET UNE PLATINE CONFIGURÉE POUR ÊTRE FIXÉE À UN SUPPORT ET IMMOBILISER LE RAIL DISPOSÉ DEBOUT SOUS LE SUPPORT**
SYSTEM MIT EINER TRÄGERSCHIENE UND EINER PLATTE, DIE ZUR BEFESTIGUNG AN EINEM TRÄGER UND ZUR IMMOBILISIERUNG DER UNTER DEM TRÄGER STEHENDEN SCHIENE KONFIGURIERT IST
SYSTEM COMPRISING A CARRIER RAIL AND A PLATE CONFIGURED TO BE ATTACHED TO A SUPPORT AND TO IMMOBILISE THE RAIL ARRANGED STANDING UNDER THE SUPPORT

(30) Priorité: 16.12.2016 FR 1662697
(43) Date de publication de la demande: 23.10.2019
(73) Titulaire: Legrand France, 87000 Limoges (FR); Legrand SNC, 87000 Limoges (FR)
(72) Inventeur: GREVECHE, Cécile, 53600 Chatres La Foret (FR); DENIS, Laurent, 72190 Sarge Les Le Mans (FR)
(74) Mandataire: Santarelli
(86) Numéro de dépôt international: PCT/FR2017/053618
(87) Numéro de publication internationale: WO 2018/109420

(56) Documents cités:
- EP-A1- 1 589 626

## Description

### DOMAINE DE L'INVENTION

L'invention a trait aux éléments porteurs servant à fournir un support à un objet tel qu'un chemin de câbles.

L'invention concerne plus particulièrement les supports de ce type formés par un rail porteur orienté debout.

### ARRIERE PLAN TECHNOLOGIQUE

On connait déjà par la demande de brevet français 2 853 026 un dispositif de fixation à un plafond d'un rail porteur orienté debout, ce dispositif comportant une embase à fixer au plafond et un socle recevant le rail, le socle comportant une paroi s'étendant sensiblement perpendiculairement à l'embase munie d'au moins deux griffes de même orientation destinées à coopérer avec des ouvertures correspondantes du rail. Cette paroi comporte également une patte de verrouillage prédécoupée destinée à être pliée de manière à pouvoir s'introduire dans une autre ouverture en venant coopérer avec un bord de cette ouverture de manière à bloquer le rail en translation.

Ce dispositif est apprécié pour sa simplicité d'utilisation puisqu'il suffit d'accrocher le rail sur les griffes, ce qui ne nécessite pas d'outil tandis qu'il est relativement aisé de plier la patte de verrouillage pour bloquer le rail.

On connait également par la demande de brevet européen EP 1 589 626, un dispositif de fixation du même genre où le socle comporte une portion tubulaire dans laquelle une portion d'extrémité du rail est engagée. La portion tubulaire et le rail présentent des contours respectifs rectangulaires complémentaires l'un de l'autre, de sorte que le rail est reçu de manière ajustée dans la portion tubulaire. Une paroi de la portion tubulaire est pourvue de languettes flexibles élastiques saillant vers l'intérieur de la portion tubulaire et chacune configurée pour s'engager dans une ouverture respective du fond du rail, de sorte à s'opposer à un mouvement du rail tendant à l'extraire de la portion tubulaire. Les languettes flexibles sont configurées pour s'encliqueter automatiquement dans les ouvertures du fond du rail lorsque celui-ci est enfoncé dans la portion tubulaire.

### OBJET DE L'INVENTION

L'invention vise à fournir un système du même genre mais aux performances mécaniques améliorées, tout en restant simple et commode d'usage.

L'invention propose à cet effet un système comportant un rail porteur et une platine configurée pour être fixée à un support dans une orientation nominale prédéterminée et pour immobiliser, alors qu'elle est dans l'orientation nominale, un tronçon d'extrémité du rail de sorte que le rail est disposé debout avec ledit tronçon d'extrémité qui est à son sommet, ledit rail étant un élément profilé de section prédéterminée comportant un fond présentant dans ledit tronçon d'extrémité au moins une ouverture de contour prédéterminé située à un emplacement prédéterminé, ladite platine comportant un logement de réception dudit tronçon d'extrémité du rail, ledit logement présentant une ouverture d'introduction du tronçon d'extrémité qui est située en bas quand la platine est dans ladite orientation nominale, ledit logement admettant une configuration d'immobilisation du tronçon d'extrémité du rail dans laquelle une patte en saillie est insérée dans ladite ouverture du fond et empêche le retrait du tronçon d'extrémité du rail alors que le logement est délimité latéralement par des faces maintenant le tronçon d'extrémité suivant les directions autres que la direction longitudinale du rail, ladite platine étant configurée pour que ledit logement prenne automatiquement ladite configuration d'immobilisation lorsque ledit tronçon d'extrémité du rail y est enfoncé puis tend à s'en extraire ;
caractérisé en ce que ladite platine comporte un corps et un verrou mobile par rapport au corps, ledit verrou étant rigide et comportant une dite face délimitant le logement, prévue pour être située en regard du fond du tronçon d'extrémité, ledit verrou rigide comportant également ladite patte en saillie, qui est donc rigide, et qui saille de ladite face que comporte le verrou, lequel verrou est mobile entre une position de verrouillage dans laquelle ledit logement est dans la configuration d'immobilisation et une position de rebroussement prévue pour que la patte soit plus vers l'extérieur du logement que la face externe du fond du tronçon d'extrémité, ledit verrou étant guidé par rapport au corps de la platine suivant une direction inclinée vers le haut et vers l'extérieur du logement quand la platine est dans l'orientation nominale de sorte que lors de l'enfoncement du tronçon d'extrémité du rail dans le logement alors que la platine est dans l'orientation nominale, le tronçon d'extrémité entraîne le verrou vers le haut et vers l'extérieur du logement au moins jusqu'à la position de rebroussement, qu'ensuite un déplacement du verrou et du rail l'un vers l'autre insère la patte dans ladite ouverture du fond et qu'ensuite un déplacement du tronçon d'extrémité du rail vers le bas entraîne le verrou pour faire passer le logement à la configuration d'immobilisation.

Ainsi, il suffit d'enfoncer le tronçon d'extrémité du rail dans le logement de la platine puis de relâcher le rail pour que la platine et le rail soient fixés l'un à l'autre.

Le maintien procuré par le système selon l'invention est particulièrement robuste, la patte saillante introduite dans l'ouverture du rail étant rigide, contrairement aux languettes flexibles élastiques du dispositif antérieur susmentionné.

L'invention repose sur l'observation qu'il est possible d'obtenir une commodité d'association de la platine et du rail semblable à celle obtenue par encliquetage mais sans l'inconvénient en matière de robustesse dû à la flexibilité élastique des languettes d'encliquetage, en prévoyant que l'obstacle pénétrant dans l'ouverture du rail lors de l'enfoncement fasse partie d'une pièce rigide mobile se déplaçant automatiquement lors de l'enfoncement.

Selon des caractéristiques avantageuses de mise en œuvre:
- le déplacement du verrou et du rail l'un vers l'autre qui insère la patte dans l'ouverture du fond est dû au poids du verrou qui, alors que la platine est dans l'orientation nominale, fait se déplacer le verrou vers le bas, et donc vers le rail, après que la position de rebroussement a été atteinte ;
- le verrou présente une paroi principale disposée debout lorsque la platine est dans son orientation nominale, et au moins deux oreilles de montage situées de part et d'autre de la paroi principale et s'étendant chacune transversalement en débord de la paroi principale, ladite paroi principale comporte au moins une portion droite comportant ladite face délimitant le logement, ladite patte en saillie saillant depuis la portion droite vers le logement, ladite portion droite étant configurée pour venir au contact du fond du rail lorsque le logement est dans la configuration d'immobilisation, lesdites oreilles de montage étant configurés pour glisser sur des rampes de guidage que comporte le corps pour guider le mouvement du verrou par rapport au corps suivant ladite direction inclinée vers le haut et vers l'extérieur du logement quand la platine est dans l'orientation nominale ;

- ladite patte en saillie est séparée de ladite portion droite par une découpe, la patte s'étendant entre une extrémité proximale par laquelle elle se raccorde à la portion droite et une extrémité distale à laquelle elle présente un bord libre ; la patte étant configurée pour rentrer en contact par son bord libre avec un bord supérieur de l'ouverture du fond lorsque le logement est en configuration d'immobilisation ;
- ladite paroi principale comporte une portion inclinée prolongeant longitudinalement la portion droite et présentant la même inclinaison que la direction inclinée suivant laquelle le verrou est guidé par rapport au corps, les oreilles de montage étant chacune formées par un prolongement de la portion inclinée présentant la même inclinaison, de sorte que lesdites oreilles de montage présentent chacune une surface de guidage inclinée configurée pour glisser à plat sur une dite rampe de guidage respective en regard ;
- le verrou comporte deux oreilles de montage supplémentaires situées de part et d'autre de la paroi principale et configurées pour glisser sur des rampes de guidage supplémentaires que comporte le corps pour guider le mouvement du verrou par rapport au corps ;
- le fond du tronçon d'extrémité du rail comporte une ouverture supplémentaire de contour prédéterminé située à un emplacement prédéterminé distinct de l'emplacement de l'ouverture du fond ; et la paroi principale du verrou comporte une portion droite supplémentaire et une patte en saillie supplémentaire agencées les unes par rapport aux autres comme ladite portion droite et ladite patte en saillie, la portion droite et la portion droite supplémentaire étant coplanaires, la patte en saillie supplémentaire étant insérée dans l'ouverture supplémentaire du fond lorsque le logement est en configuration d'immobilisation ;
- les rampes de guidage que comporte le corps de la platine sont formées par des lumières ménagées dans des parois en regard que comporte le corps de la platine, la paroi principale du verrou étant disposée entre lesdites parois en regard et les oreilles de montage du verrou étant chacune engagées dans une lumière respective ;
- au moins une desdites parois en regard du corps comporte une languette rabattable s'enracinant dans un bord supérieur d'une desdites lumières et configurée pour être déformable à son extrémité proximale de sorte qu'elle peut adopter une première position stable dans laquelle elle est à l'écart de ladite lumière et une deuxième position stable dans laquelle elle est rabattue dans ladite lumière pour empêcher le glissement vers l'extérieur du logement de l'oreille de montage du verrou reçue dans cette lumière tandis que le verrou est dans sa position de verrouillage ;
- chaque oreille de montage du verrou présente une forme en L avec une première branche s'étendant transversalement à la paroi principale depuis un bord longitudinal respectif de la paroi principale et une deuxième branche prolongeant la première branche vers l'intérieur du logement ; l'espace délimité par la première branche, la deuxième branche et la paroi principale étant configuré pour recevoir une portion de ladite paroi du corps qui délimite le bord inférieur de la lumière formée dans cette paroi et dans laquelle ladite oreille de montage est engagée ;
- chaque lumière présente une portion étroite et une portion large prolongeant la portion étroite vers l'extérieur du logement ;
- le verrou comporte un bossage en saillie situé sous la patte en saillie du verrou et configuré pour venir au contact d'un bord inférieur de l'ouverture du rail dans laquelle la patte en saillie est engagée lorsque le logement est en configuration d'immobilisation ;
- le corps de la platine comporte une gouttière comportant un fond et deux ailes latérales chacune raccordée à un côté longitudinal respectif du fond et s'étendant en regard l'une de l'autre, une paroi principale dudit verrou étant disposée entre lesdites ailes latérales, ladite paroi principale dudit verrou et ledit fond de la gouttière étant en regard l'un de l'autre ; lesdites faces délimitant le logement dans la configuration d'immobilisation étant formées par des faces internes du fond de la gouttière, des ailes latérales de la gouttière et du verrou ; et/ou
- ledit verrou est fait à partir d'une plaque de métal rigide découpée et pliée.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective d'un système selon l'invention, comportant une platine et un rail porteur, la platine étant dans une orientation nominale et dans une configuration initiale, le rail étant disposé debout avec son sommet tourné vers la platine et prêt à être reçu dans la platine pour y être immobilisé ;
- les figures 2 et 3 sont des vues respectivement en élévation et de dessous de la platine que comporte ce système ;
- la figure 4 est la vue en coupe repérée par IV-IV sur la figure 3, montrant en outre un support auquel est fixé la platine ;
- la figure 5 est une vue en perspective du corps de la platine, montré isolément ;
- les figures 6 et 7 sont respectivement des vues en élévation et en perspective du verrou de la platine ;
- la figure 8 est une vue similaire à la figure 1, montrant le système dans un état de service dans lequel un tronçon d'extrémité du rail est reçu dans la platine, cette dernière étant dans une configuration d'immobilisation, avec des organes de verrouillage secondaire du système montrés dans un état inactivé ;
- la figure 9 est une vue similaire à la figure 8, mais avec les organes de verrouillage secondaire qui sont activés ;
- les figures 10 et 11 sont des vues similaires aux figures 3 et 4, mais avec le système qui est dans l'état de service illustré à la figure 8 ;
- les figures 12 à 14 sont des vues similaires aux figures 2 à 4, mais avec la platine qui est dans une configuration intermédiaire entre la configuration initiale et la configuration d'immobilisation ; et
- les figures 15 à 18 sont respectivement des vues en perspective de dos, en perspective de face, en élévation de face et en coupe d'une variante de réalisation du verrou.

### DESCRIPTION DETAILLEE D'EXEMPLES DE REALISATION

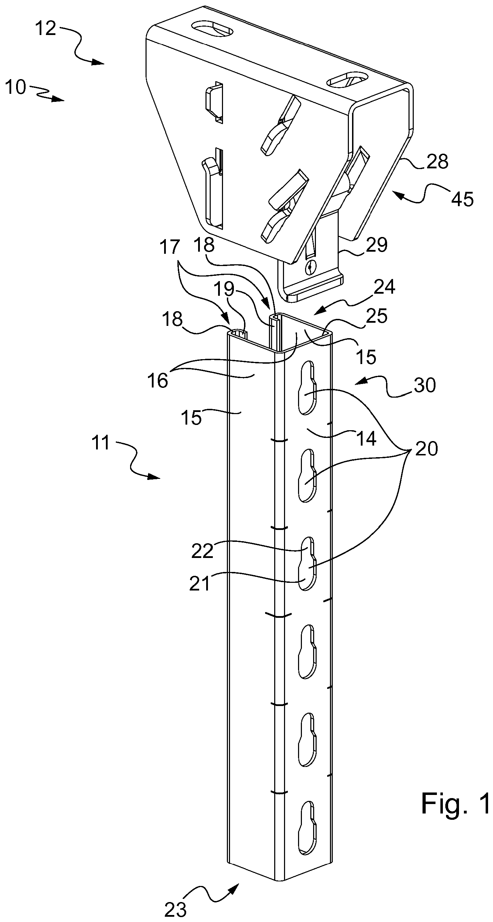

La figure 1 montre un système 10 comportant un rail porteur 11 et une platine 12.

Le rail 11 est ici montré disposé debout, sous la platine 12, avec son sommet tourné vers la platine 12.

Le rail porteur 11 est un élément métallique profilé, ici à section en forme de U.

Le rail 11 s'étend longitudinalement depuis une première extrémité 23 que l'on voit en bas sur la figure 1, jusqu'à une seconde extrémité 24 située à son sommet et à laquelle il présente un bord libre 25.

Le rail 11 comporte un fond 14 et deux ailes latérales 15 chacune raccordée par un côté longitudinal à un côté longitudinal respectif du fond 14.

Les ailes latérales 15 sont en regard l'une de l'autre et ont chacune une conformation qui est l'image miroir de la conformation de l'autre aile latérale 15. Ici, chaque aile latérale 15 comporte une paroi latérale 16 et un retour 17 à section en L comportant un rebord 18 et un bord tombé 19. Pour chaque aile latérale 15 :
- la paroi latérale 16 s'étend entre le fond 14 et le retour 17, et plus précisément entre le fond 14 et le rebord 18 du retour 17 ;
- chaque rebord 18 est en regard du fond 14 et s'étend entre le bord tombé 19 et la paroi latérale 16 ; et
- chaque bord tombé 19 est, du côté externe, en regard de la paroi latérale 16 et, du côté interne, en regard du bord tombé 19 de l'autre aile latérale 15.

Le fond 14 présente une série d'ouvertures 20 de contour prédéterminé disposées le long du rail 11 selon un pas régulier.

Chaque ouverture 20 présente une forme en trou de serrure longitudinalement orientée comme l'orientation générale du rail 11.

Chaque ouverture 20 présente une portion large 21 et une portion étroite 22 prolongeant la portion large 21.

Les ouvertures 20 sont ici toutes identiques et orientées de la même manière.

Plus précisément, le rail 11 est orienté de sorte que la portion étroite 22 se trouve au-dessus de la portion large 21, c'est-à-dire avec la portion étroite 22 qui est tournée vers la platine 12.

Les ouvertures 20 sont configurées pour le passage d'un organe de fixation tel qu'une vis, par exemple lorsque le rail 11 doit être fixé à un mur.

Le rail 11 fait ici partie d'un système pour fournir un support horizontal à un chemin de câbles (non illustré). Ce système comprend le rail 11 et une console (non illustrée) présentant une portion configurée pour former ledit support horizontal lorsqu'elle est fixée au rail 11, lui-même fixé verticalement à une structure telle qu'un mur ou un plafond.

Comme il sera expliqué ultérieurement, la platine 12 sert à fixer le rail 11 à une structure telle qu'un plafond.

Pour fixer la console au rail porteur 11, chaque paroi latérale 16 présente une série d'ouvertures (non illustrées pour simplifier les dessins) disposées le long du rail 11 selon un pas régulier. Chaque ouverture d'une aile latérale 15 est alignée avec une ouverture de l'autre aile latérale 15 suivant une direction transversale à l'orientation générale du rail 11, ici une direction parallèle au fond 14 et transversale aux parois latérales 16. Chacune des ouvertures est configurée pour recevoir un organe mâle de fixation de la console.

Pour plus de détails on pourra se reporter à la demande de brevet français 3 006 511.

En variante, on peut utiliser, pour fixer la console, des éléments filetés coopérant avec des écrous à plaquette engagés entre les bords tombés 19 du rail 11, en appui sur ces bord tombés 19. On peut aussi utiliser des éléments de fixation positionnés au travers des ouvertures 20.

La platine 12 va maintenant être décrite plus en détail à l'appui des figures 1 à 4.

La platine 12 est configurée pour être fixée à un support dans une orientation nominale prédéterminée et pour immobiliser, alors qu'elle est dans l'orientation nominale, un tronçon d'extrémité 30 du rail 11 de sorte que le rail 11 est disposé debout avec le tronçon d'extrémité 30 qui est à son sommet.

Sur la figure 1, la platine 12 est montrée dans son orientation nominale prédéterminée, avec le rail 11 qui est disposé debout sous la platine 12 mais à l'écart de cette dernière.

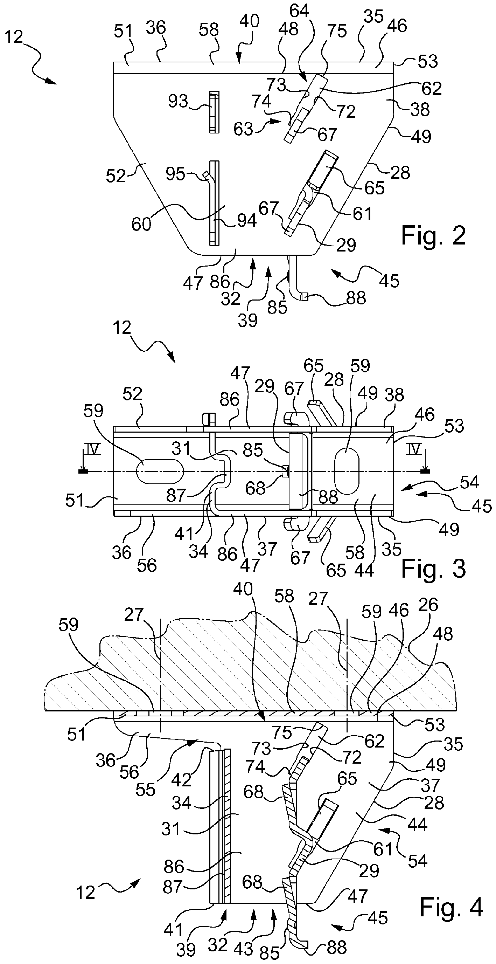

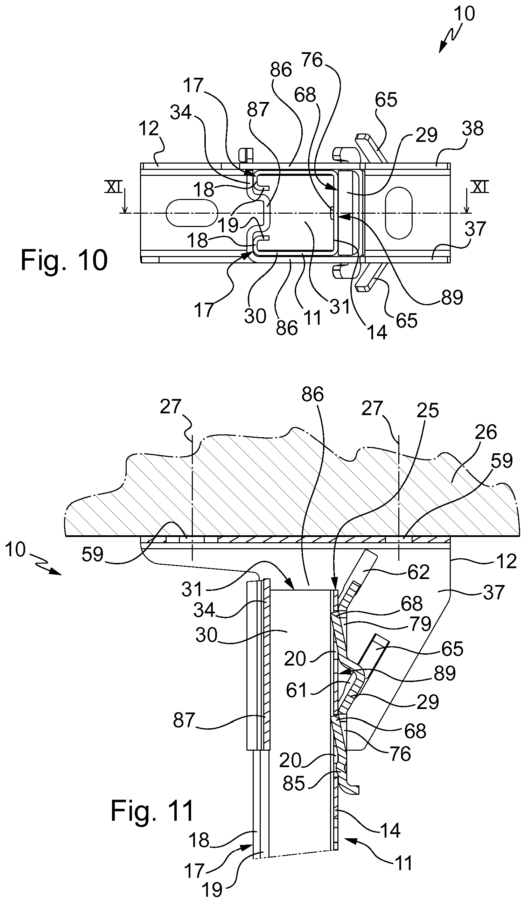

Le support est ici un plafond 26 (figures 4, 11 et 14) auquel la platine 12 est fixée à l'aide de vis 27 schématisées par des traits mixtes sur les figures 4, 11 et 14.

La platine 12 comporte un corps 28 et un verrou 29 monté mobile sur le corps 28.

La platine 12 présente un logement 31, délimité par le corps 28 et le verrou 29, pourvu d'une ouverture 32 qui est située en bas quand la platine 12 est dans son orientation nominale.

Le logement 31 est configuré pour recevoir, au travers de l'ouverture 32, le tronçon d'extrémité 30 du rail 11.

Sur les figures 1 à 4, la platine 12 est montrée dans une configuration initiale qu'elle présente lorsqu'elle est dans son orientation nominale et que le tronçon d'extrémité 30 est hors du logement 31.

Dans la configuration initiale de la platine 12, le verrou 29 occupe une position initiale et le logement 31 est dans une configuration initiale.

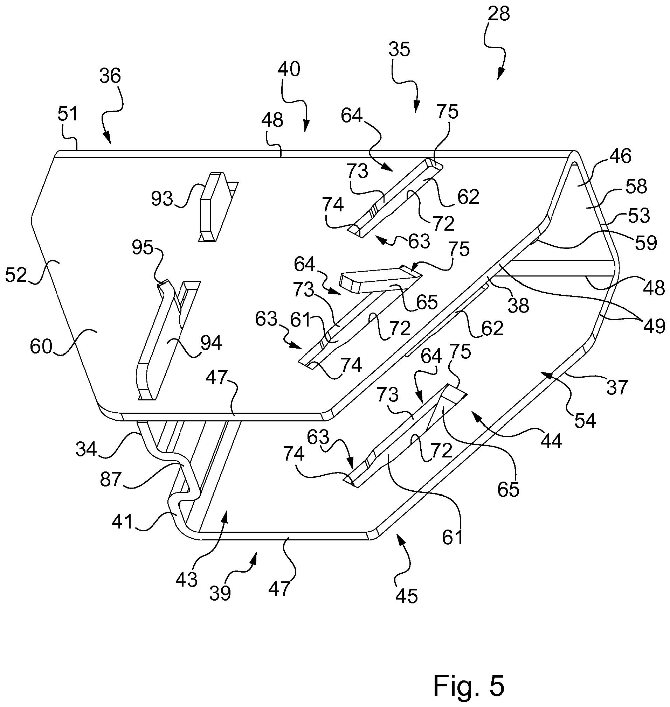

On va maintenant décrire en détail le corps 28 de la platine 12, toujours en référence aux figures 1 à 4 et en outre en référence à la figure 5.

Le corps 28 est ici fait à partir d'une plaque de métal découpée et pliée.

Comme expliqué plus loin, le montage du verrou 29 sur le corps 28 s'effectue lors du pliage de la plaque de métal dont est fait le corps. Le corps 28 mis en forme ne se trouve donc pas, en pratique, sans le verrou 29 monté dessus. Toutefois, pour simplifier, le verrou 29 n'est pas montré sur la figure 5.

Le corps 28 comporte une première portion 35 et une deuxième portion 36 formant une extension de la première portion 35.

La première portion 35 comporte une gouttière 45 et une paroi de fermeture 46 de la gouttière 45.

La gouttière 45 s'étend longitudinalement entre une première extrémité 39 et une deuxième extrémité 40.

En position nominale de la platine 12, la première extrémité 39 forme l'extrémité inférieure de la gouttière 45 ; tandis que la deuxième extrémité 40 forme l'extrémité supérieure de la gouttière 45 ; la gouttière 45 étant ainsi généralement orientée selon une direction sensiblement verticale.

La gouttière 45 comporte un fond 34, une première aile latérale 37 et une deuxième aile latérale 38 chacune raccordée par un premier côté longitudinal à un côté longitudinal respectif du fond 34.

La première aile latérale 37 forme une première paroi et la deuxième aile latérale 38 forme une deuxième paroi.

Le fond 34, la première aile latérale 37 et la deuxième aile latérale 38 délimitent ensemble un espace interne 44 de la gouttière 45.

Le fond 34 présente un ressaut 87 saillant du côté de l'espace interne 44 et s'étendant tout du long du fond 34.

Le ressaut 87 est configuré pour être reçu entre les bords tombés 19 du rail 11 lorsque ce dernier est reçu dans le logement 31 et immobilisé par la platine 12.

Les première et deuxième ailes latérales 37 et 38 s'étendent en regard l'une de l'autre et ont chacune une conformation qui est l'image miroir de la conformation de l'autre aile latérale.

Chacune des ailes latérales 37 et 38 présente un bord inférieur 47 situé à la première extrémité 39, un bord supérieur 48 situé à la deuxième extrémité 40 et un bord latéral 49 situé du côté opposé au fond 34.

Le bord latéral 49 raccorde le bord inférieur 47 au bord supérieur 48.

La paroi de fermeture 46 raccorde les bords supérieurs 48 respectifs des ailes latérales 37 et 38 en s'étendant depuis les bords latéraux 49, où elle présente un bord latéral 53, jusqu'au droit du fond 34.

La paroi de fermeture 46 délimite l'espace interne 44 de la gouttière 45 du côté de son extrémité supérieure 40.

Le fond 34 s'étend longitudinalement entre un bord inférieur 41 situé au même niveau que les bords inférieurs 47 des ailes latérales 37 et 38, et un bord supérieur 42, opposé au bord inférieur 41, s'étendant en regard et à une certaine distance de la paroi de fermeture 46, de sorte qu'une ouverture 55 débouchant dans l'espace interne 44 est ménagée entre le bord supérieur 42 et la paroi de fermeture 46.

Le bord inférieur 41 du fond 34 et les bords inférieurs 47 des ailes latérales 37 et 38 délimitent ensemble une ouverture inférieure 43 de la gouttière 45, qui débouche dans l'espace interne 44.

Le bord latéral 53 de la paroi de fermeture 46 et les bords latéraux 49 des ailes latérales 37 et 38 délimitent ensemble une ouverture latérale 54, qui débouche dans l'espace interne 44.

La deuxième portion 36 prolonge la première portion 35 de telle sorte que la première portion 35 et la deuxième portion 36 s'étendent de part et d'autre du fond 34.

La deuxième portion 36 comporte une première paroi d'extension 56 qui prolonge une portion de la première aile latérale 37 située au droit de l'ouverture 55.

La deuxième portion 36 comporte en outre une deuxième paroi d'extension 52 et une troisième paroi d'extension 51 qui prolongent respectivement la deuxième aile latérale 38 et la paroi de fermeture 46.

La troisième paroi d'extension 51 et la paroi de fermeture 46 forment ensemble une paroi de fixation 58 de la platine 12 de forme rectangulaire.

La paroi de fixation 58 comporte deux trous traversant 59 ménagés respectivement dans la paroi de fermeture 46 et la troisième paroi d'extension 51 pour le passage des vis de fixation 27.

Dans l'orientation nominale de la platine 12, la paroi de fixation 58 est disposée couchée, par exemple contre le plafond 26, tandis que les ailes latérales 37 et 38 et le fond 34 sont disposés debout.

La deuxième paroi d'extension 52 et la deuxième aile latérale 38 forment une joue latérale 60.

La joue latérale 60 présente une portion rectangulaire directement raccordée à un côté longitudinal de la paroi de fixation 58 et une portion trapézoïdale prolongeant la portion rectangulaire en rétrécissant vers l'extrémité inférieure 39 de la gouttière 45.

Le corps 28 présente en outre des lumières ménagées dans chacune des ailes latérales 37 et 38.

Chaque lumière ménagée dans une aile latérale se trouve en regard d'une lumière correspondante ménagée dans l'autre aile latérale, deux lumières en regard formant ainsi un couple de lumières.

Le corps 28 présente un couple de lumières inférieures 61 et un couple de lumières supérieures 62 disposé au-dessus du couple de lumières inférieures 61.

Les lumières 61 et 62 présentent chacune une forme généralement allongée selon une direction inclinée vers la paroi de fermeture 46 et vers le côté opposé au fond 34, ou autrement dit, inclinée vers le haut et vers l'extérieur du logement 31 quand la platine 12 est dans l'orientation nominale.

Chaque lumière s'étend longitudinalement entre un bord d'extrémité inférieur 74 et un bord d'extrémité supérieur 75 opposé au bord d'extrémité inférieur 74 et s'étend latéralement entre un bord longitudinal inférieur 72 et un bord longitudinal supérieur 73 situé en regard du bord longitudinal inférieur 72.

En position nominale de la platine 12, les bords d'extrémité et longitudinaux inférieurs 74 et 72 sont situés respectivement en-dessous des bords d'extrémité et longitudinaux supérieurs 75 et 73.

Les lumières 61 et 62 présentent des contours respectifs identiques.

Chaque lumière présente une portion étroite 63 et une portion large 64 prolongeant la portion étroite 63 vers le côté opposé au fond 34, ou autrement dit vers l'extérieur du logement 31.

Les bords longitudinaux 72 et 73 des lumières 61 et 62 forment des rampes de guidage configurées pour guider le mouvement du verrou 29 par rapport au corps 28 de la platine 12 suivant la direction inclinée vers le haut et vers l'extérieur du logement 31 quand la platine 12 est dans l'orientation nominale.

Chacune des ailes latérales 37 et 38 comporte en outre une languette rabattable 65 s'enracinant dans un bord supérieur 75 de la lumière inférieure 61 respective.

La languette rabattable 65 est configurée pour être déformable à son extrémité proximale de sorte qu'elle peut adopter une première position stable dans laquelle elle est à l'écart de la lumière inférieure 61 et une deuxième position stable dans laquelle elle est rabattue dans la lumière inférieure 61.

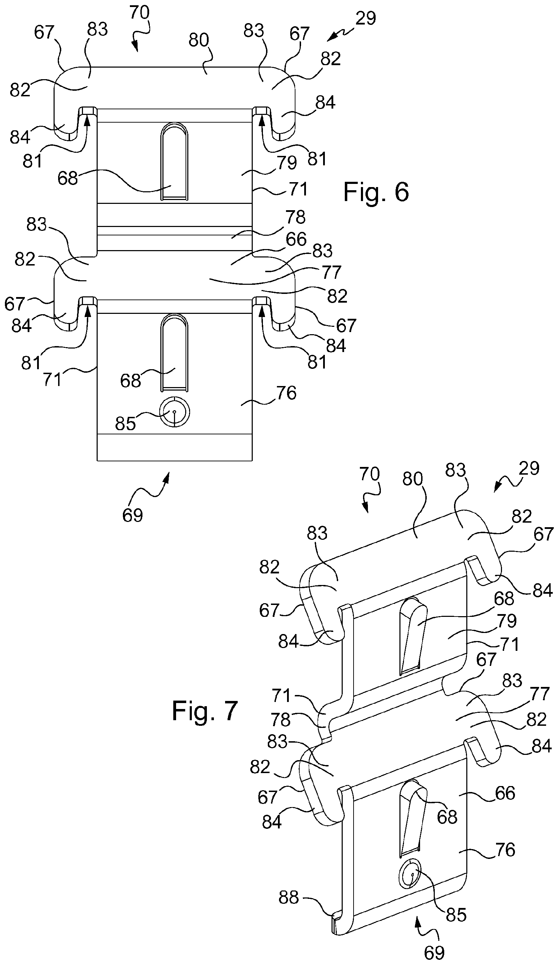

On va maintenant décrire en détail le verrou 29 de la platine 12, toujours en référence aux figures 1 à 4 et en outre en référence aux figures 6 et 7.

Le verrou 29 est ici fait à partir d'une plaque de métal rigide découpée et pliée, le verrou 29 étant ainsi un élément rigide.

Le verrou 29 comporte une paroi principale 66, quatre oreilles de montage 67 et deux pattes en saillies 68.

La paroi principale 66 présente une forme généralement rectangulaire et s'étend longitudinalement entre une première extrémité 69 et une deuxième extrémité 70 opposée à la première extrémité 69.

En position nominale de la platine 12, la première extrémité 69 est tournée vers le bas et forme donc une extrémité inférieure de la paroi principale 66 ; tandis que la deuxième extrémité 70 est tournée vers le haut et forme donc une extrémité supérieure de la paroi principale 66 ; la paroi principale 66 étant ainsi généralement orientée debout.

La paroi principale 66 présente deux bords longitudinaux 71 opposés rejoignant chacun la première extrémité 69 et la deuxième extrémité 70.

La paroi principale 66 présente successivement, depuis son extrémité inférieure 69 vers son extrémité supérieure 70, une première portion droite 76, une première portion inclinée 77, une portion de jonction 78, une deuxième portion droite 79 et une deuxième portion inclinée 80.

La première portion inclinée 77 prolonge longitudinalement la première portion droite 76 en présentant la même inclinaison que la direction inclinée suivant laquelle le verrou 29 est guidé par rapport au corps.

La paroi principale 66 présente en outre à son extrémité inférieure 69 un retour 88 prolongeant la première portion droite 76 du même côté que la portion inclinée 77.

Une première patte en saillie 68 saille depuis la portion droite 76, du côté opposé au côté vers où s'étend la portion inclinée 77, c'est-à-dire vers l'intérieur du logement 31 lorsque le verrou est monté sur le corps 28.

Ici, la patte en saillie 68 est séparée de la portion droite 76 par une découpe, la patte 68 s'étendant entre une extrémité proximale par laquelle elle se raccorde à la portion droite 76 et une extrémité distale à laquelle elle présente un bord libre.

La patte 68 présente ici une forme en I et est longitudinalement orientée selon une direction inclinée vers le haut et vers l'intérieur du logement 31 lorsque le verrou est monté sur le corps 28.

La deuxième portion inclinée 80, la deuxième portion droite 79 et la deuxième patte en saillie 68 sont agencées les unes par rapport aux autres comme la première portion inclinée 77, la première portion droite 76 et la première patte en saillie 68 ; la première portion droite 76 et la deuxième portion droite 79 étant coplanaires.

Une première oreille de montage 67 saille depuis un bord longitudinal 71 respectif de la paroi principale 66 tandis qu'une deuxième oreille de montage 67, disposée en regard de la première oreille de montage 67, saille depuis l'autre bord longitudinal 71 de la paroi principale 66. Les première et deuxième oreilles de montages 67 sont ainsi situées de part et d'autre de la paroi principale 66 et s'étendant chacune transversalement en débord de la paroi principale 66.

Les première et deuxième oreilles de montage 67 sont chacune formées par un prolongement de la première portion inclinée 77 présentant la même inclinaison que la portion inclinée 77, de sorte que les oreilles de montage 67 présentent chacune une surface de guidage inclinée inférieure 81 et une surface de guidage inclinée supérieure 82, opposée à la surface de guidage inclinée inférieure 81.

Chaque oreille de montage 67 présente une forme en L avec une première branche 83 qui s'étend depuis un bord longitudinal 71 respectif de la paroi principale 66 et une deuxième branche 84 qui prolonge la première branche 83 vers le côté où est situé la première portion droite 76, c'est-à-dire vers l'intérieur du logement 31 lorsque le verrou est monté sur le corps 28.

La première oreille de montage 67 et la deuxième oreille de montage 67, situées de part et d'autre de la paroi principale 66, au niveau de la première portion inclinée 77, forment un couple d'oreilles de montage 67 inférieur.

Deux autres oreilles de montage 67 situées au niveau de la deuxième portion inclinée 80 forment un couple d'oreilles de montage 67 supérieur.

Le verrou 29 comporte en outre un bossage 85, situé sous la première patte en saillie 68 et saillant du même côté que cette patte 68.

Comme bien visible en particulier sur les figures 1 à 4, le verrou 29 est monté sur le corps 28 de la platine 12 avec sa paroi principale 66 disposée entre les ailes latérales 37 et 38, en regard du fond 34 de la gouttière 45, entre l'ouverture latérale 54 et le fond 34 de la gouttière 45 ; tandis que les oreilles de montage 67 sont chacune engagées dans une lumière respective du corps 28.

Plus précisément, les oreilles 67 du couple d'oreilles inférieur sont engagées dans les lumières 61 du couple de lumières inférieures ; tandis que les oreilles 67 du couple d'oreilles supérieur sont engagées dans les lumières 62 du couple de lumières supérieures.

Le logement 31 est une portion de l'espace interne 44 de la gouttière 45, délimitée latéralement par une face interne du fond 34, qui est tournée vers le verrou 29, une face interne du verrou 29, qui est tournée vers le fond 34, et des faces internes en regard des portions 86 des ailes latérales 37 et 38 qui sont entre le fond 34 et le verrou 29.

On notera que ces portions 86 changent de taille avec la position du verrou 29 par rapport au corps 28.

L'ouverture 32 est une portion de l'ouverture inférieure 43 de la gouttière 45 qui est délimitée du côté opposé au fond 34 par la face interne du verrou 29.

L'ouverture 32 change donc également de taille avec la position du verrou 29 par rapport au corps 28.

Les pattes 68 saillent de la face interne du verrou 29 dans le logement 31 et s'étendent chacune au moins partiellement en regard de l'ouverture 32.

On notera que dans la position initiale du verrou 29 illustrée sur les figures 1 à 4, chaque oreille de montage 67 repose sur le bord d'extrémité inférieur 74 de la lumière 61 ou 62 dans laquelle elle est engagée, la portion de l'aile latérale délimitant le bord d'extrémité inférieur 74 de la lumière étant reçue entre la paroi principale 66 et la deuxième branche 84 de l'oreille de montage 67.

On notera également que chacune des oreilles de montage 67 est libre de coulisser dans la lumière 61 ou 62 dans laquelle elle est engagée, entre le bord d'extrémité inférieur 74 et le bord d'extrémité supérieur 75 ; le verrou 29 étant ainsi mobile en translation par rapport au corps 28 entre deux positions extrêmes.

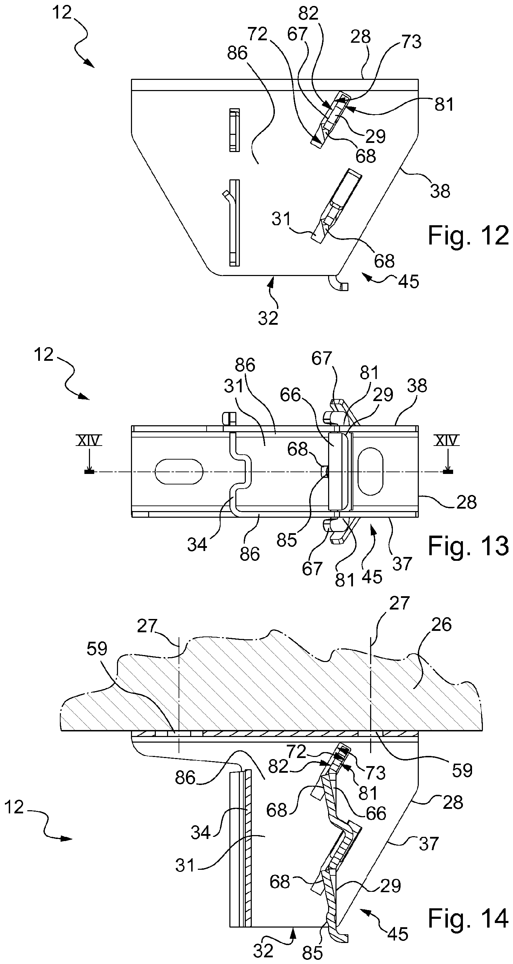

Une première position extrême correspond à la position initiale du verrou 29 illustrée sur les figures 1 à 4 ; une seconde position extrême dans laquelle le verrou 29 est plus éloigné du fond 34 de la gouttière 45 est illustrée sur les figures 12 à 14.

Pour chaque oreille de montage 67 engagée dans une lumière 61 ou 62, la surface de guidage inférieure 81 est configurée pour glisser à plat sur le bord longitudinal inférieur 72 en regard ; tandis que la surface de guidage supérieure 82 est configurée pour glisser à plat sur le bord longitudinal supérieur 73 en regard.

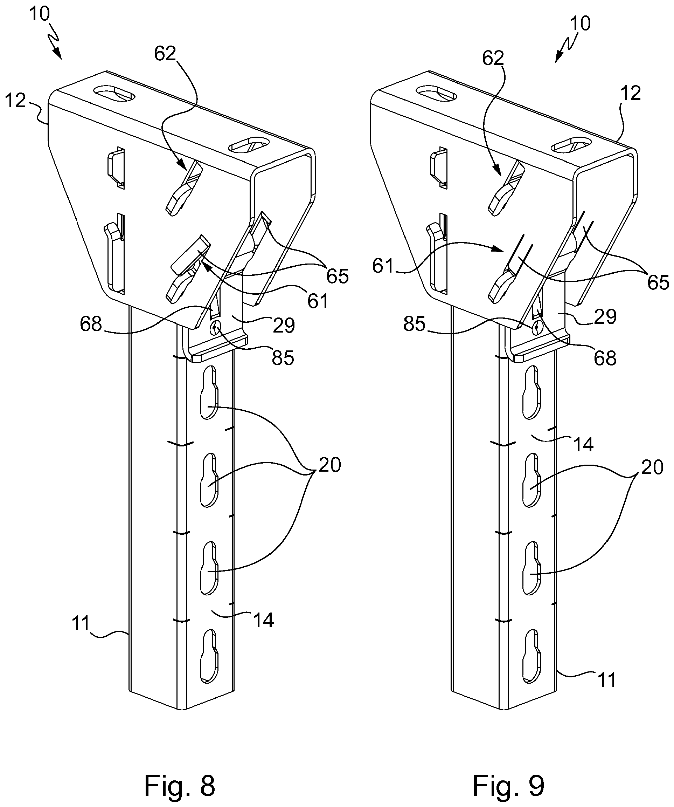

On va maintenant décrire, à l'appui des figures 8 à 11, le système 10 dans un état de service dans lequel un tronçon d'extrémité 30 du rail 11 est reçu dans la platine 12, cette dernière étant dans une configuration d'immobilisation.

Dans la configuration d'immobilisation de la platine 12, le verrou 29 est dans une position de verrouillage dans laquelle le logement 31 est dans une configuration d'immobilisation.

Lorsque le verrou 29 est dans sa position de verrouillage, les languettes rabattables 65 peuvent être rabattues dans les lumières inférieures 61, de sorte que le verrou 29 ne peut pas s'écarter de sa position de verrouillage en se déplaçant vers l'extérieur du logement 31 ; les languettes 65 formant ainsi des organes de verrouillage secondaire du système 10 (Figure 9).

Le tronçon d'extrémité 30 est reçu dans le logement 31 avec le fond 14 du rail 11 tourné vers le verrou 29 et les retours 17 tournés vers le fond 34 de la gouttière 45.

Le tronçon d'extrémité 30 reçu dans le logement 31 de la platine 12 comporte ici deux ouvertures 20, c'est-à-dire que deux ouvertures 20 se trouvent dans le logement 31.

Lorsque le logement 31 est dans sa configuration d'immobilisation du tronçon d'extrémité 30 du rail 11, chaque patte en saillie 68 est engagée dans une ouverture 20 respective du fond 14 du rail 11 de sorte que la patte 68 entre en contact par son bord libre avec un bord supérieur de l'ouverture 20 dans laquelle elle est engagée, ce qui empêche le retrait du tronçon d'extrémité 30 du rail 11 hors du logement 31.

On notera que le bossage 85 vient au contact du bord inférieur de l'ouverture 20 du rail 11 dans laquelle la première patte en saillie 68 est engagée. Comme expliqué plus loin, le bossage 85 forme ici un organe d'indexation de la position du verrou 29 par rapport aux ouvertures 20 du fond 14 du rail 11.

On notera également que la platine 12 maintient aussi bien le rail 11 lorsque ce dernier est orienté dans le sens inverse que celui illustré, c'est-à-dire avec la portion étroite 22 des ouvertures 20 tournée vers le bas plutôt que vers le haut.

Chaque portion droite 76 et 79 de la paroi principale 66 vient au contact d'une face externe 89 du fond 14 du rail 11 ; tandis que chaque rebord 18 des retours 17 du rail vient au contact de la face interne du fond 34 de la gouttière 45 ; que le ressaut 87 est reçu entre les bords tombés 19 du rail 11 ; et que chaque paroi latérale 16 du rail 11 vient au contact d'une face interne d'une portion 86 respective des ailes latérales 37 et 38.

Le logement 31 de la platine 12 a ici une forme généralement parallélépipédique correspondant à la forme du tronçon d'extrémité 30 du rail 11.

Le tronçon d'extrémité 30 est ainsi maintenu dans le logement 31 suivant les directions autres que la direction longitudinale du rail 11.

On va maintenant décrire comment immobiliser le rail 11 dans la platine 12 alors que cette dernière est fixée dans son orientation nominale à un support tel que le plafond 26.

Le rail 11, orienté comme sur la figure 1, est introduit par un utilisateur dans le logement 31 au travers de l'ouverture 32.

Lors de l'enfoncement du tronçon d'extrémité 30 dans le logement 31, le bord libre 25 entre en contact avec le retour 88, le bossage 85 et/ou la première patte en saillie 68.

Le tronçon d'extrémité 30 entraîne ainsi le verrou 29 vers le haut et vers l'extérieur au moins jusqu'à une position de rebroussement prévue pour que chacune des pattes 68 soit plus vers l'extérieur du logement 31 que la face externe 89 du fond 14 du tronçon d'extrémité 30.

La position de rebroussement peut être par exemple celle illustrée sur les figures 12 à 14, où le rail n'est pas montré pour simplifier le dessin.

Une fois cette position de rebroussement atteinte, la poursuite de l'enfoncement du tronçon d'extrémité 30 dans le logement 31 n'entraîne plus le verrou 29 de sorte que le tronçon d'extrémité 30 peut être enfoncé jusqu'à ce que chaque patte en saillie 68 soit entièrement en regard d'une ouverture 20 respective du fond 14 du rail 11.

Le verrou 29 peut alors, sous l'effet de son propre poids, glisser vers le bas et vers le tronçon d'extrémité 30, ce qui insère automatiquement chaque patte 68 dans l'ouverture 20 respective du fond 14.

Une fois les pattes 68 insérées dans les ouvertures 20, le rail 11 est lâché par l'utilisateur et peut, sous l'effet de son propre poids, tendre à s'extraire du logement 31 et ainsi entraîner le verrou 29 à glisser encore plus vers le bas et vers le fond 34 de la gouttière 45 pour faire passer le logement 31 automatiquement à sa configuration d'immobilisation.

On notera que le processus décrit ci-dessus, au cours duquel le verrou 29 atteint une position de rebroussement puis redescend vers le tronçon d'extrémité 30 du rail 11 pour insérer une patte en saillie 68 dans une ouverture 20 du fond 14 du rail 11, se produit en pratique ici deux fois.

En effet, au cours de l'insertion du tronçon d'extrémité 30, la première patte en saillie 68 sera temporairement introduite dans l'ouverture 20 du fond 14 du rail 11 la plus proche de son bord libre 25, avant d'en ressortir et d'être finalement insérée dans l'ouverture 20 suivante.

On notera également que l'effort nécessaire à l'utilisateur pour immobiliser le rail 11 dans la platine 12 est relativement faible puisque, à part le poids du verrou 29 qui est négligeable, la platine 12 n'oppose pas d'autre résistance à l'introduction du tronçon d'extrémité 30 du rail 11 dans le logement 31.

On notera encore que le démontage du rail 11 de la platine 12 est aisé puisqu'il suffit à l'utilisateur de pousser légèrement le rail 11 vers le haut pour pouvoir écarter le verrou 29 du fond 14 du rail 11 et désengager les pattes en saillie 68 des ouvertures 20, les languettes 65 ayant bien entendu été désengagées au préalable des lumières 61, si nécessaire.

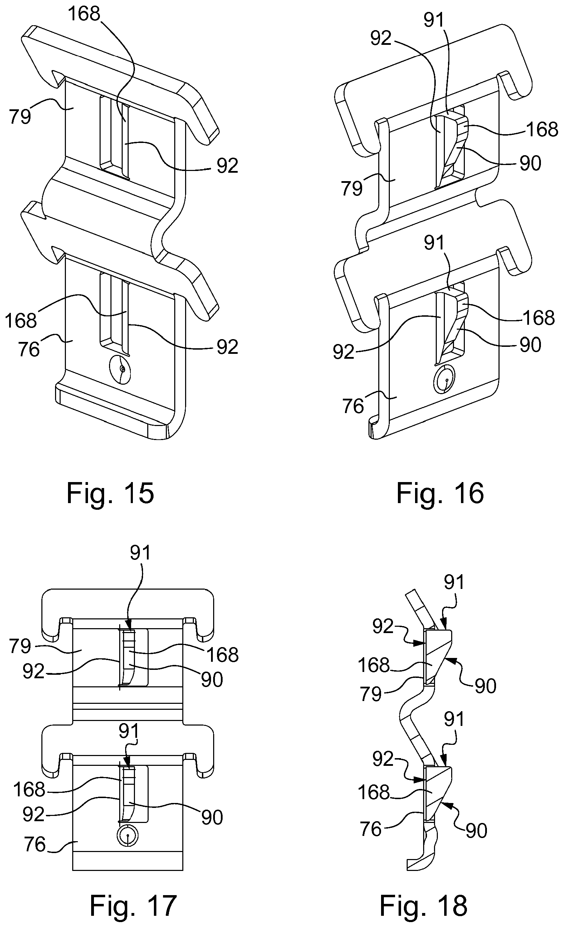

Les figures 15 à 18 illustrent une variante de réalisation du verrou identique à celle décrite ci-dessus sauf que les pattes en saillie 68 sont remplacées par des pattes en saillie 168 réalisées différemment.

La patte en saillie 168 présente ici une forme de coin, dont un premier bord 90 s'étend depuis la portion droite 76 jusqu'à un deuxième bord 91 qui prolonge le premier bord 90 jusqu'à la portion droite 76.

Le deuxième bord 91 présente une orientation couchée lorsque le verrou est monté sur le corps 28.

Le premier bord 90 comporte un tronçon incliné et un tronçon droit. Le tronçon incliné s'étend entre la portion droite 76 et le tronçon droit, lequel s'étend entre le tronçon incliné et le bord 91. Le tronçon droit est debout et le tronçon incliné s'étend selon une direction inclinée vers le haut et vers l'intérieur du logement 31 lorsque le verrou est monté sur le corps 28.

La patte 168 se raccorde à la portion droite 76 par un troisième bord 92 qui raccorde le premier bord 90 et le deuxième bord 91, le troisième bord 92 étant longitudinalement orienté comme la paroi principale 66.

La deuxième patte en saillie 168 est agencée de manière similaire visà-vis de la deuxième portion droite 79.

Lorsque le logement 31 est dans sa configuration d'immobilisation du tronçon d'extrémité 30 du rail 11, chaque patte en saillie 168 est engagée dans une ouverture 20 respective du fond 14 du rail 11 de sorte que la patte 168 entre en contact par son deuxième bord 91 avec un bord supérieur de l'ouverture 20 dans laquelle elle est engagée.

On observera que chacune des pattes 68 et 168 présente une rampe formée, pour la patte 68, par sa face tournée vers le fond 34 et, pour la patte 168, par le tronçon incliné du bord 90 ; et que chacune des pattes 68 et 168 présente une butée formée, pour la patte 68, par sa tranche d'extrémité et, pour la patte 168, par le bord 91.

On va maintenant décrire comment est fabriquée la platine 12.

Comme expliqué ci-dessus, le corps 28 et le verrou 29 sont chacun obtenus à partir d'une plaque de métal découpée et pliée.

Au cours de la mise en forme de la plaque servant à fabriquer le corps 28, les portions de la plaque prévues pour former les ailes latérales 37 et 38 sont repliées l'une vers l'autre tandis que le verrou 29 est interposé entre elles de sorte que ses oreilles de montage 67 s'engagent chacune dans une portion large 64 d'une lumière 61 ou 62 respective.

On notera que le fond 34 de la gouttière 45 fait partie d'une portion de la plaque qui est directement raccordée par une première extrémité à la portion de la plaque formant la première aile latérale 37 ; tandis qu'à son extrémité opposée, cette portion présente deux extensions 93 et 94 qui prolongent chacune le fond 34 au travers d'une lumière respective ménagée dans la joue latérale 60, à la jonction entre la deuxième aile latérale 38 et la deuxième paroi d'extension 52.Chaque extension 93 et 94 dépasse partiellement au-delà de la joue latérale 60.

L'extension 94, située en dessous de l'extension 93, présente une portion repliée 95 s'étendant en regard de la surface externe de la deuxième paroi d'extension 52. Cette portion repliée 95 forme une butée qui s'oppose à ce que les ailes latérale 37 et 38 s'écartent l'une de l'autre, notamment lorsque le rail 11 est soumis à des efforts transverses à son orientation générale.

Le corps 28 et le verrou 29 sont ici tout deux réalisés dans un même matériau métallique dont la limite de déformation élastique est comprise entre 280 et 355 N/mm².

Le module d'Young du matériau est ici d'environ 210 000 MPa.

L'épaisseur de la plaque à partir de laquelle est obtenu le verrou 29 est supérieure à l'épaisseur de la plaque à partir de laquelle est obtenu le corps 28, de sorte que le verrou 29 présente une rigidité plus importante.

La plaque à partir de laquelle est obtenu le corps 28 a ici une épaisseur d'environ 3 mm, de sorte qu'il est relativement aisé de la déformer, ce qui est commode pour effectuer les plis permettant d'obtenir le corps 28, et aussi pour rabattre les languettes 65.

La plaque à partir de laquelle est obtenu le verrou 29 a ici une épaisseur d'environ 4 mm, de sorte qu'elle est rigide c'est-à-dire particulièrement difficile à déformer. Cela permet d'éviter que la patte 68 ou 168 ne se déforme lorsqu'elle est soumise aux efforts exercés par le rail 11, qui doit supporter une charge pouvant être relativement élevée.

En principe, l'effort exercé sur le verrou 29 par le rail 11 est dirigé vers le bas de sorte qu'il n'est normalement pas utile de maintenir le verrou dans la position de verrouillage. Les languettes rabattables 65 permettent par précaution un tel maintien, au cas où de façon inattendue un effort serait exercé vers le haut, par exemple à la suite d'un choc accidentel.

Dans une variante non illustrée, le verrou comporte, à son extrémité supérieure, une rampe inclinée vers le haut et vers l'extérieur du logement configurée pour entrainer le rail et le verrou l'un vers l'autre lorsque le bord libre du rail entre en contact avec la rampe lors de la poursuite du mouvement d'enfoncement du tronçon d'extrémité après que la position de rebroussement a été atteinte.

Dans des variantes non illustrées :
- le bord supérieur du fond de la gouttière se raccorde directement à la paroi de fermeture de la première portion du corps, et il n'y a pas d'ouverture entre le fond et la paroi de fermeture ;
- les rampes de guidage sont ménagées sur le verrou et les oreilles de montage sont formées sur le corps ;
- les languettes rabattables sont configurées pour être rabattues dans les lumières supérieures plutôt que dans les lumières inférieures, ou dans les deux ;
- seule une des deux ailes latérales de la gouttière comporte des languettes rabattables ;
- le logement de la platine et le rail présentent en section une forme générale différente, par exemple hexagonale ;
- le verrou ne comporte pas de portion inclinée mais une portion droite unique ;
- le verrou comporte seulement deux oreilles de montage ;
- le verrou comporte, en plus de la paroi principale, deux ailes latérales raccordées chacune à un bord longitudinal de la paroi principale et s'étendant en regard, lesdites ailes étant configurées pour délimiter au moins partiellement le logement entre le fond de la gouttière et la paroi principale du verrou ;
- les plaques à partir desquelles sont respectivement obtenus le corps et le verrou présentent la même épaisseur ;
- les ouvertures dans le fond du rail ne sont pas en trou de serrure mais ont une autre forme, par exemple ovale, circulaire ou rectangle ;
- le tronçon d'extrémité reçu dans le logement ne comporte qu'une seule ouverture et le verrou qu'une seule patte en saillie ; et/ou
- le tronçon d'extrémité reçu dans le logement comporte plus de deux ouvertures, par exemple trois ouvertures, tandis que le verrou comporte au moins une patte en saillie configurée pour s'engager dans l'une quelconque des trois ouvertures, ou comporte autant de pattes en saillie que d'ouvertures.

De nombreuses autres variantes sont possibles en fonction des circonstances, et l'on rappelle à cet égard que l'invention ne se limite pas aux exemples décrits et représentés.

## Revendications

1. Système comportant un rail porteur (11) et une platine (12) configurée pour être fixée à un support (26) dans une orientation nominale prédéterminée et pour immobiliser, alors qu'elle est dans l'orientation nominale, un tronçon d'extrémité (30) du rail (11) de sorte que le rail (11) est disposé debout avec ledit tronçon d'extrémité (30) qui est à son sommet, ledit rail (11) étant un élément profilé de section prédéterminée comportant un fond (14) présentant dans ledit tronçon d'extrémité (30) au moins une ouverture (20) de contour prédéterminé située à un emplacement prédéterminé, ladite platine (12) comportant un logement (31) de réception dudit tronçon d'extrémité (30) du rail (11), ledit logement (31) présentant une ouverture (32) d'introduction du tronçon d'extrémité (30) qui est située en bas quand la platine (12) est dans ladite orientation nominale, ledit logement (31) admettant une configuration d'immobilisation du tronçon d'extrémité (30) du rail (11) dans laquelle une patte en saillie (68 ; 168) est insérée dans ladite ouverture (20) du fond (14) et empêche le retrait du tronçon d'extrémité (30) du rail (11) alors que le logement (31) est délimité latéralement par des faces maintenant le tronçon d'extrémité (30) suivant les directions autres que la direction longitudinale du rail (11), ladite platine (12) étant configurée pour que ledit logement (31) prenne automatiquement ladite configuration d'immobilisation lorsque ledit tronçon d'extrémité (30) du rail (11) y est enfoncé puis tend à s'en extraire ;
**caractérisé en ce que** ladite platine (12) comporte un corps (28) et un verrou mobile (29) par rapport au corps (28), ledit verrou (29) étant rigide et comportant une dite face délimitant le logement (31), prévue pour être située en regard du fond (14) du tronçon d'extrémité (30), ledit verrou rigide (29) comportant également ladite patte en saillie (68 ; 168), qui est donc rigide, et qui saille de ladite face que comporte le verrou (29), lequel verrou (29) est mobile entre une position de verrouillage dans laquelle ledit logement (31) est dans la configuration d'immobilisation et une position de rebroussement prévue pour que la patte (68 ; 168) soit plus vers l'extérieur du logement (31) que la face externe (89) du fond (14) du tronçon d'extrémité (30), ledit verrou (29) étant guidé par rapport au corps (28) de la platine (12) suivant une direction inclinée vers le haut et vers l'extérieur du logement (31) quand la platine (12) est dans l'orientation nominale de sorte que lors de l'enfoncement du tronçon d'extrémité (30) du rail (11) dans le logement (31) alors que la platine (12) est dans l'orientation nominale, le tronçon d'extrémité (30) entraîne le verrou (29) vers le haut et vers l'extérieur du logement (31) au moins jusqu'à la position de rebroussement, qu'ensuite un déplacement du verrou (29) et du rail (11) l'un vers l'autre insère la patte (68; 168) dans ladite ouverture (20) du fond (14) et qu'ensuite un déplacement du tronçon d'extrémité (30) du rail (11) vers le bas entraîne le verrou (29) pour faire passer le logement (31) à la configuration d'immobilisation.

2. Système selon la revendication 1, **caractérisé en ce que** le déplacement du verrou (29) et du rail (11) l'un vers l'autre qui insère la patte (68 ; 168) dans l'ouverture (20) du fond (14) est dû au poids du verrou (29) qui, alors que la platine (12) est dans l'orientation nominale, fait se déplacer le verrou (29) vers le bas, et donc vers le rail (11), après que la position de rebroussement a été atteinte.

3. Système selon l'une des revendications 1 et 2, **caractérisé en ce que** le verrou (29) présente une paroi principale (66) disposée debout lorsque la platine (12) est dans son orientation nominale, et au moins deux oreilles de montage (67) situées de part et d'autre de la paroi principale (66) et s'étendant chacune transversalement en débord de la paroi principale (66), ladite paroi principale (66) comporte au moins une portion droite (76, 79) comportant ladite face délimitant le logement (31), ladite patte en saillie (68 ; 168) saillant depuis la portion droite (76, 79) vers le logement (31), ladite portion droite (76, 79) étant configurée pour venir au contact du fond (14) du rail (11) lorsque le logement (31) est dans la configuration d'immobilisation, lesdites oreilles de montage (67) étant configurés pour glisser sur des rampes de guidage (72, 73) que comporte le corps (28) pour guider le mouvement du verrou (29) par rapport au corps (28) suivant ladite direction inclinée vers le haut et vers l'extérieur du logement (31) quand la platine (12) est dans l'orientation nominale.

4. Système selon la revendication 3, **caractérisé en ce que** ladite patte en saillie (68 ; 168) est séparée de ladite portion droite (76, 79) par une découpe, la patte (68 ; 168) s'étendant entre une extrémité proximale par laquelle elle se raccorde à la portion droite (76, 79) et une extrémité distale à laquelle elle présente un bord libre ; la patte (68 ; 168) étant configurée pour rentrer en contact par son bord libre avec un bord supérieur de l'ouverture (20) du fond (14) lorsque le logement (31) est en configuration d'immobilisation.

5. Système selon l'une des revendications 3 ou 4, **caractérisé en ce que** ladite paroi principale (66) comporte une portion inclinée (77, 80) prolongeant longitudinalement la portion droite (76, 79) et présentant la même inclinaison que la direction inclinée suivant laquelle le verrou (29) est guidé par rapport au corps (28), les oreilles de montage (67) étant chacune formées par un prolongement de la portion inclinée (77, 80) présentant la même inclinaison, de sorte que lesdites oreilles de montage (67) présentent chacune une surface de guidage (81, 82) inclinée configurée pour glisser à plat sur une dite rampe de guidage (72, 73) respective en regard.

6. Système selon l'une des revendications 3 à 5, **caractérisé en ce que** le verrou (29) comporte deux oreilles de montage (67) supplémentaires situées de part et d'autre de la paroi principale (66) et configurées pour glisser sur des rampes de guidage (72, 73) supplémentaires que comporte le corps (28) pour guider le mouvement du verrou (29) par rapport au corps (28).

7. Système selon l'une des revendications 3 à 6, **caractérisé en ce que** le fond (14) du tronçon d'extrémité (30) du rail (11) comporte une ouverture (20) supplémentaire de contour prédéterminé située à un emplacement prédéterminé distinct de l'emplacement de l'ouverture (20) du fond (14) ; et la paroi principale (66) du verrou (29) comporte une portion droite (76, 79) supplémentaire et une patte en saillie (68 ; 168) supplémentaire agencées les unes par rapport aux autres comme ladite portion droite (76, 79) et ladite patte en saillie (68 ; 168), la portion droite (76, 79) et la portion droite (76, 79) supplémentaire étant coplanaires, la patte en saillie (68 ; 168) supplémentaire étant insérée dans l'ouverture (20) supplémentaire du fond (14) lorsque le logement (31) est en configuration d'immobilisation.

8. Système selon l'une des revendications 3 à 7, **caractérisé en ce que** les rampes de guidage (72, 73) que comporte le corps (28) de la platine (12) sont formées par des lumières (61, 62) ménagées dans des parois (37, 38) en regard que comporte le corps (28) de la platine (12), la paroi principale (66) du verrou (29) étant disposée entre lesdites parois (37, 38) en regard et les oreilles de montage (67) du verrou (29) étant chacune engagées dans une lumière (61, 62) respective.

9. Système selon la revendication 8, **caractérisé en ce qu'**au moins une desdites parois (37, 38) en regard du corps (28) comporte une languette rabattable (65) s'enracinant dans un bord supérieur (75) d'une desdites lumières (61) et configurée pour être déformable à son extrémité proximale de sorte qu'elle peut adopter une première position stable dans laquelle elle est à l'écart de ladite lumière (61) et une deuxième position stable dans laquelle elle est rabattue dans ladite lumière (61) pour empêcher le glissement vers l'extérieur du logement (31) de l'oreille de montage (67) du verrou (29) reçue dans cette lumière (61) tandis que le verrou (29) est dans sa position de verrouillage.

10. Système selon la revendication 8, **caractérisé en ce que** chaque oreille de montage (67) du verrou (29) présente une forme en L avec une première branche (83) s'étendant transversalement à la paroi principale (66) depuis un bord longitudinal (71) respectif de la paroi principale (66) et une deuxième branche (84) prolongeant la première branche (83) vers l'intérieur du logement (31); l'espace délimité par la première branche (83), la deuxième branche (84) et la paroi principale (66) étant configuré pour recevoir une portion de ladite paroi (37, 38) du corps (28) qui délimite le bord inférieur (74) de la lumière (61, 62) formée dans cette paroi (37, 38) et dans laquelle ladite oreille de montage (67) est engagée.

11. Système selon l'une des revendications 8 à 10, **caractérisé en ce que** chaque lumière (61, 62) présente une portion étroite (63) et une portion large (64) prolongeant la portion étroite (63) vers l'extérieur du logement (31).

12. Système selon l'une des revendications 1 à 11, **caractérisé en ce que** le verrou (29) comporte un bossage (85) en saillie situé sous la patte en saillie (68 ; 168) du verrou (29) et configuré pour venir au contact d'un bord inférieur de l'ouverture (20) du rail (11) dans laquelle la patte en saillie (68 ; 168) est engagée lorsque le logement (31) est en configuration d'immobilisation.

13. Système selon l'une des revendications 1 à 12, **caractérisé en ce que** le corps (28) de la platine (12) comporte une gouttière (45) comportant un fond (34) et deux ailes latérales (37, 38) chacune raccordée à un côté longitudinal respectif du fond (34) et s'étendant en regard l'une de l'autre, une paroi principale (66) dudit verrou (29) étant disposée entre lesdites ailes latérales (37, 38), ladite paroi principale (66) dudit verrou (29) et ledit fond (34) de la gouttière (45) étant en regard l'un de l'autre; lesdites faces délimitant le logement (31) dans la configuration d'immobilisation étant formées par des faces internes du fond (34) de la gouttière (45), des ailes latérales (37, 38) de la gouttière (45) et du verrou (29).

14. Système selon l'une quelconque des revendications 1 à 13, **caractérisé en ce que** ledit verrou (29) est fait à partir d'une plaque de métal rigide découpée et pliée.

## Patentansprüche

1. System mit einer Tragschiene (11) und einer Platine (12), die dazu ausgelegt ist, in einer vorbestimmten nominalen Ausrichtung an einem Träger (26) befestigt zu werden und, wenn sie sich in der nominalen Ausrichtung befindet, einen Endabschnitt (30) der Schiene (11) so festzulegen, dass die Schiene (11) mit dem an ihrem Scheitelpunkt befindlichen Endabschnitt (30) aufrecht angeordnet ist, wobei die Schiene (11) ein Profilelement mit vorbestimmtem Querschnitt ist, das einen Boden (14) aufweist, der in dem Endabschnitt (30) zumindest eine Öffnung (20) mit vorbestimmter Kontur aufweist, die sich an einer vorbestimmten Stelle befindet, wobei die Platine (12) eine Aufnahme (31) zum Aufnehmen des Endabschnitts (30) der Schiene (11) enthält, wobei die Aufnahme (31) eine Öffnung (32) zum Einführen des Endabschnitts (30) aufweist, die dann, wenn die Platine (12) in der nominalen Ausrichtung ist, unten liegt, wobei die Aufnahme (31) eine Festlegestellung des Endabschnitts (30) der Schiene (11) zulässt, in der eine vorspringende Lasche (68; 168) in die Öffnung (20) des Bodens (14) eingefügt ist und das Entweichen des Endabschnitts (30) der Schiene (11) verhindert, während die Aufnahme (31) seitlich durch Flächen begrenzt ist, die den Endabschnitt (30) in anderen Richtungen als der Längsrichtung der Schiene (11) festhalten, wobei die Platine (12) dazu ausgelegt ist, dass die Aufnahme (31) automatisch die Festlegestellung einnimmt, wenn der Endabschnitt (30) der Schiene (11) in diese eingeschoben ist und dann dazu neigt, daraus zu entweichen;
**dadurch gekennzeichnet, dass** die Platine (12) einen Körper (28) und einen bezüglich des Körpers (28) beweglichen Riegel (29) enthält, wobei der Riegel (29) starr ist und eine die Aufnahme (31) begrenzende Fläche aufweist, die dazu vorgesehen ist, dem Boden (14) des Endabschnitts (30) gegenüberzuliegen, wobei der starre Riegel (29) auch die vorspringende Lasche (68; 168) aufweist, die somit starr ist und von der Fläche, die der Riegel (29) aufweist, vorspringt, wobei der Riegel (29) zwischen einer Verriegelungsposition, in der sich die Aufnahme (31) in der Festlegestellung befindet, und einer Umkehrposition beweglich ist, die dazu vorgesehen ist, dass die Lasche (68; 168) weiter aus der Aufnahme (31) herausragt als die Außenfläche (89) des Bodens (14) des Endabschnitts (30), wobei der Riegel (29) in Bezug auf den Körper (28) der Platine (12) in einer geneigten Richtung nach oben und aus der Aufnahme (31) heraus geführt wird, wenn sich die Platine (12) in der nominalen Ausrichtung befindet, so dass beim Einschieben des Endabschnitts (30) der Schiene (11) in die Aufnahme (31) dann, wenn sich die Platine (12) in der nominalen Ausrichtung befindet, der Endabschnitt (30) den Riegel (29) nach oben und aus der Aufnahme (31) heraus zumindest bis zur Umkehrposition mitnimmt, dass dann durch eine Bewegung des Riegels (29) und der Schiene (11) aufeinander zu die Lasche (68; 168) in die genannte Öffnung (20) des Bodens (14) eingeführt wird und dass anschließend durch eine Bewegung des Endabschnitts (30) der Schiene (11) nach unten der Riegel (29) mitgenommen wird, um die Aufnahme (31) in die Festlegestellung zu überführen.

2. System nach Anspruch 1, **dadurch gekennzeichnet, dass** die Bewegung des Riegels (29) und der Schiene (11) aufeinander zu, durch welche die Lasche (68; 168) in die Öffnung (20) des Bodens (14) eingeführt wird, auf die Gewichtskraft des Riegels (29) zurückzuführen ist, die dann, wenn sich die Platine (12) in der nominalen Ausrichtung befindet, den Riegel (29) nach unten und damit in Richtung der Schiene (11) bewegt, nachdem die Umkehrposition erreicht wurde.

3. System nach einem der Ansprüche 1 und 2, **dadurch gekennzeichnet, dass** der Riegel (29) eine Hauptwand (66) aufweist, die aufrecht angeordnet ist, wenn sich die Platine (12) in ihrer nominalen Ausrichtung befindet, sowie zumindest zwei Montageansätze (67), die sich auf beiden Seiten der Hauptwand (66) befinden und sich jeweils quer über die Hauptwand (66) hinaus erstrecken, wobei die Hauptwand (66) zumindest einen geraden Abschnitt (76, 79) umfasst, der die die Aufnahme (31) begrenzende Fläche aufweist, wobei die vorspringende Lasche (68; 168) von dem geraden Abschnitt (76, 79) in Richtung der Aufnahme (31) vorspringt, wobei der gerade Abschnitt (76, 79) dazu ausgelegt ist, mit dem Boden (14) der Schiene (11) in Kontakt zu gelangen, wenn sich die Aufnahme (31) in der Festlegestellung befindet, wobei die Montageansätze (67) dazu ausgelegt sind, auf Führungsrampen (72, 73) zu gleiten, die der Körper (28) aufweist, um die Bewegung des Riegels (29) in Bezug auf den Körper (28) in der geneigten Richtung nach oben und aus der Aufnahme (31) heraus zu führen, wenn sich die Platine (12) in der nominalen Ausrichtung befindet.

4. System nach Anspruch 3, **dadurch gekennzeichnet, dass** die vorspringende Lasche (68; 168) durch einen Ausschnitt von dem geraden Abschnitt (76, 79) getrennt ist, wobei sich die Lasche (68; 168) zwischen einem proximalen Ende, mit dem sie sich an den geraden Abschnitt (76, 79) anschließt, und einem distalen Ende, an dem sie eine freie Kante aufweist, erstreckt; wobei die Lasche (68; 168) dazu ausgelegt ist, mit ihrer freien Kante eine obere Kante der Öffnung (20) des Bodens (14) zu berühren, wenn sich die Aufnahme (31) in Festlegestellung befindet.

5. System nach einem der Ansprüche 3 oder 4, **dadurch gekennzeichnet, dass** die Hauptwand (66) einen geneigten Abschnitt (77, 80) aufweist, der den geraden Abschnitt (76, 79) in Längsrichtung fortsetzt und die gleiche Neigung aufweist wie die geneigte Richtung, in der der Riegel (29) in Bezug auf den Körper (28) geführt wird, wobei die Montageansätze (67) jeweils aus einem Fortsatz des geneigten Abschnitts (77, 80) mit der gleichen Neigung gebildet sind, so dass die Montageansätze (67) jeweils eine geneigte Führungsfläche (81, 82) aufweisen, die dazu ausgelegt ist, flach auf einer jeweils gegenüberliegenden Führungsrampe (72, 73) zu gleiten.

6. System nach einem der Ansprüche 3 bis 5, **dadurch gekennzeichnet, dass** der Riegel (29) zwei zusätzliche Montageansätze (67) aufweist, die auf beiden Seiten der Hauptwand (66) angeordnet und dazu ausgelegt sind, auf zusätzlichen Führungsrampen (72, 73) zu gleiten, die der Körper (28) aufweist, um die Bewegung des Riegels (29) in Bezug auf den Körper (28) zu führen.

7. System nach einem der Ansprüche 3 bis 6, **dadurch gekennzeichnet, dass** der Boden (14) des Endabschnitts (30) der Schiene (11) eine zusätzliche Öffnung (20) mit vorbestimmter Kontur aufweist, die sich an einer vorbestimmten Stelle befindet, die sich von der Stelle der Öffnung (20) im Boden (14) unterscheidet; und die Hauptwand (66) des Riegels (29) einen zusätzlichen geraden Abschnitt (76, 79) und eine zusätzliche vorspringende Lasche (68; 168) aufweist, die wie der gerade Abschnitt (76, 79) und die vorspringende Lasche (68; 168) relativ zueinander angeordnet sind, wobei der gerade Abschnitt (76, 79) und der zusätzliche gerade Abschnitt (76, 79) koplanar verlaufen, wobei die zusätzliche vorspringende Lasche (68; 168) in die zusätzliche Öffnung (20) des Bodens (14) eingeführt ist, wenn sich die Aufnahme (31) in der Festlegestellung befindet.

8. System nach einem der Ansprüche 3 bis 7, **dadurch gekennzeichnet, dass** die Führungsrampen (72, 73), die der Körper (28) der Platine (12) aufweist, aus Schlitzen (61, 62) in gegenüberliegenden Wänden (37, 38) gebildet sind, die der Körper (28) der Platine (12) aufweist, wobei die Hauptwand (66) des Riegels (29) zwischen den gegenüberliegenden Wänden (37, 38) angeordnet ist und die Montageansätze (67) des Riegels (29) jeweils in einen entsprechenden Schlitz (61, 62) eingreifen.

9. System nach Anspruch 8, **dadurch gekennzeichnet, dass** zumindest eine der dem Körper (28) gegenüberliegenden Wände (37, 38) eine umklappbare Zunge (65) aufweist, die in einer oberen Kante (75) eines der Schlitze (61) verankert und dazu ausgelegt ist, an ihrem proximalen Ende verformt werden zu können, so dass sie eine erste stabile Position einnehmen kann, in der sie von dem Schlitz (61) beabstandet ist, sowie eine zweite stabile Position, in der sie in den Schlitz (61) eingeklappt ist, um zu verhindern, dass der in diesem Schlitz (61) aufgenommene Montageansatz (67) des Riegels (29) aus der Aufnahme (31) herausgleitet, wenn sich der Riegel (29) in seiner Verriegelungsposition befindet.

10. System nach Anspruch 8, **dadurch gekennzeichnet, dass** jeder Montageansatz (67) des Riegels (29) eine L-Form mit einem ersten Schenkel (83), der sich von einer jeweiligen Längskante (71) der Hauptwand (66) quer zur Hauptwand (66) erstreckt, und einem zweiten Schenkel (84), der den ersten Schenkel (83) in die Aufnahme (31) hinein fortsetzt, aufweist; wobei der durch den ersten Schenkel (83), den zweiten Schenkel (84) und die Hauptwand (66) begrenzte Raum dazu ausgelegt ist, einen Abschnitt der Wand (37, 38) des Körpers (28) aufzunehmen, der die untere Kante (74) des in dieser Wand (37, 38) ausgebildeten Schlitzes (61, 62) begrenzt, in den der Montageansatz (67) eingreift.

11. System nach einem der Ansprüche 8 bis 10, **dadurch gekennzeichnet, dass** jeder Schlitz (61, 62) einen schmäleren Abschnitt (63) und einen breiteren Abschnitt (64) aufweist, der den schmäleren Abschnitt (63) aus der Aufnahme (31) heraus fortsetzt.

12. System nach einem der Ansprüche 1 bis 11, **dadurch gekennzeichnet, dass** der Riegel (29) eine vorspringende Erhebung (85) aufweist, die sich unter der vorspringenden Lasche (68; 168) des Riegels (29) befindet und dazu ausgelegt ist, mit einer unteren Kante der Öffnung (20) der Schiene (11) in Kontakt zu gelangen, in die die vorspringende Lasche (68; 168) eingreift, wenn sich die Aufnahme (31) in der Festlegestellung befindet.

13. System nach einem der Ansprüche 1 bis 12, **dadurch gekennzeichnet, dass** der Körper (28) der Platine (12) eine Rinne (45) mit einem Boden (34) und zwei Seitenflügeln (37, 38) aufweist, die sich jeweils an eine jeweilige Längsseite des Bodens (34) anschließen und sich einander gegenüberliegend erstrecken, wobei eine Hauptwand (66) des Riegels (29) zwischen den Seitenflügeln (37, 38) angeordnet ist, wobei die Hauptwand (66) des Riegels (29) und der Boden (34) der Rinne (45) einander gegenüberliegen; wobei die Flächen, die die Aufnahme (31) in der Festlegestellung begrenzen, aus den Innenflächen des Bodens (34) der Rinne (45), der Seitenflügel (37, 38) der Rinne (45) und des Riegels (29) gebildet sind.

14. System nach einem der Ansprüche 1 bis 13, **dadurch gekennzeichnet, dass** der Riegel (29) aus einer starren Stanzbiegeplatte aus Metall hergestellt ist.

## Claims

1. System comprising a carrier rail (11) and a plate (12) configured to be fastened to a mounting (26) in a predetermined nominal orientation and, when it is in the nominal orientation, to immobilize an end portion (30) of the rail (11) such that the rail (11) is disposed upright with said end portion (30) at its apex, said rail (11) being an elongate member of predetermined cross-section comprising a back (14) having in said end portion (30) at least one opening (20) of predetermined contour situated at a predetermined location, said plate (12) comprising an accommodation (31) for reception of said end portion (30) of the rail (11), said accommodation (31) having an opening (32) for insertion of the end portion (30) which is located below when the plate (12) is in said nominal orientation, said accommodation (31) having an immobilization configuration of the end portion (30) of the rail (11) in which a projecting lug (68; 168) is inserted into said opening (20) of the back (14) and prevents the withdrawal of the end portion (30) of the rail (11) while the accommodation (31) is laterally delimited by faces holding the end portion (30) in the directions other than the longitudinal direction of the rail (11), said plate (12) being configured such that said accommodation (31) automatically adopts said immobilization configuration when said end portion (30) of the rail (11) is pushed therein then tends to come out therefrom;
**characterized in that** said plate (12) comprises a body (28) and a latch (29) movable relative to the body (28), said latch (29) being rigid and comprising a said face delimiting the accommodation (31), which face is provided to be located facing opposite the back (14) of the end portion (30), said rigid latch (29) also comprising said projecting lug (68; 168), which is therefore rigid, and which projects from said face that the latch (29) comprises, which latch (29) is movable between a locking position in which said accommodation (31) is in the immobilization configuration and a reversion position provided in order for the lug (68; 168) to be further towards the outside of the accommodation (31) than the outside face (89) of the back (14) of the end section (30), said latch (29) being guided relative to the body (28) of the plate (12) in a direction inclined upwardly and outwardly relative to the accommodation (31) when the plate (12) is in the nominal orientation such that on pushing the end section (30) of the rail (11) into the accommodation (31) when the plate (12) is in the nominal orientation, the end section (30) drives the latch (29) upwardly and outwardly relative to the accommodation (31) at least as far as the reversion position, that next a movement of the latch (29) and of the rail (11) relative to each other inserts the lug (68; 168) into said opening (20) of the back (14) and that next a movement of the end section (30) of the rail (11) downwards drives the latch (29) to make the accommodation (12) pass into the immobilization configuration.

2. System according to claim 1, **characterized in that** the movement of the latch (29) and of the rail (11) towards each other which inserts the lug (68; 168) into the opening (20) of the back (14) is due to the weight of the latch (29) which, while the plate (12) is in the nominal orientation, makes the latch (29) move downwards, and thus towards the rail (11), after the reversion position has been reached.

3. System according to one of claims 1 and 2, **characterized in that** the latch (29) has a main wall (66) disposed upright when the plate (12) is in its nominal orientation, and at least two mounting tabs (67) located on opposite sides of the wall (66) and each jutting transversely from the main wall (66), said main wall (66) comprises at least one straight portion (76, 79) comprising said face delimiting the accommodation (31), said projecting lug (68; 168) projecting from the straight portion (76, 79) towards the accommodation (31), said straight portion (76, 79) being configured to come into contact with the back (14) of the rail (11) when the accommodation (31) is in the immobilization configuration, said mounting tabs (67) being configured to slide over running guide surfaces (72, 73) which the body (28) comprises to guide the movement of the latch (29) relative to the body (28) in said direction inclined upwards and outwards relative to the accommodation (31) when the plate (12) is in the nominal orientation.

4. System according to claim 3, **characterized in that** said projecting lug (68; 168) is separated from said straight portion (76, 79) by a cutout, the lug (68; 168) extending between a proximal end by which it connects to the straight portion (76, 79) and a distal end at which it has a free edge; the lug (68; 168) being configured to enter into contact by its free edge with an upper edge of the opening (20) of the back (14) when the accommodation (31) is in immobilization configuration.

5. System according to one of claims 3 or 4, **characterized in that** said main wall (66) comprises an inclined portion (77, 80) longitudinally extending the straight portion (76, 79) and having the same inclination as the inclined direction in which the latch (29) is guided relative to the body (28), the mounting tabs (67) each being formed by an extension of the inclined portion (77, 80) having the same inclination, such that said mounting tabs (67) each have an inclined guide surface (81, 82) configured to slide flat over a respective said running guide face (72, 73) facing opposite.

6. System according to one of claims 3 to 5, **characterized in that** the latch (29) comprises two additional mounting tabs (67) located on opposite sides of the main wall (66) and configured to slide over the additional running guide faces (72, 73) which the body (28) comprises to guide the movement of the latch (29) relative to the body (28).

7. System according to one of claims 3 to 6, **characterized in that** the back (14) of the end section (30) of the rail (11) comprises an additional opening (20) of predetermined contour situated at a predetermined location distinct from the location of the opening (20) of the back (14); and the main wall (66) of the latch (29) comprises an additional straight portion (76, 79) and an additional projecting lug (68; 168) which are arranged relative to each other like said straight portion (76, 79) and said projecting lug (68; 168), the straight portion (76, 79) and the additional straight portion (76, 79) being coplanar, the additional projecting lug (68; 168) being inserted into the additional opening (20) of the back (14) when the accommodation (31) is in immobilization configuration.

8. System according to one of claims 3 to 7, **characterized in that** the running guide faces (72, 73) which the body (28) of the plate (12) comprise are formed by apertures (61, 62) provided in the facing walls (37, 38) which the body (28) of the plate (12) comprise, the main wall (66) of the latch (29) being disposed between said facing walls (37, 38) and the mounting tabs (67) of the latch (29) each being engaged in a respective aperture (61, 62).

9. A system according to claim 8, **characterized in that** at least one of said facing walls (37, 38) of the body (28) comprises a foldable tongue (65) emerging from an upper edge (75) of one of said apertures (61) and configured to be deformable at its proximal end such that it is able to adopt a first stable position in which it is away from said aperture (61) and a second stable position in which it is folded into said aperture (61) to prevent the sliding outwardly relative to the accommodation (31) of the mounting tab (67) of the latch (29) received **in that** aperture (61) when the latch (29) is in its locking position.

10. System according to claim 8, **characterized in that** each mounting tab (67) of the latch (29) has an L-shape having a first branch (83) extending transversely to the main wall (66) from a respective longitudinal edge (71) of the main wall (66) and a second branch (84) extending the first branch (83) inwardly relative to the accommodation (31); the space delimited by the first branch (83), the second branch (84) and the main wall (66) being configured to receive a portion of said wall (37, 38) of the body (28) that delimits the lower edge (74) of the aperture (61,62) formed **in that** wall (37, 38) and in which said mounting tab (67) is engaged.

11. System according to one of claims 8 to 10, **characterized in that** each aperture (61,62) has a straight portion (63) and a wide portion (64) extending the straight portion (63) outwardly relative to the accommodation (31).

12. System according to one of claims 1 to 11, **characterized in that** the latch (29) comprises a protruding bump (85) located under the projecting lug (68; 168) of the latch (29) and configured to come into contact with a lower edge of the opening (20) of the rail (11) in which the projecting lug (68; 168) is engaged when the accommodation (31) is in immobilization configuration.

13. System according to one of claims 1 to 12, **characterized in that** the body (28) of the plate (12) comprises a gutter (45) comprising a back (34) and two lateral flanges (37, 38) each connected to a respective longitudinal side of the back (34) and extending facing each other, a main wall (66) of said latch (29) being disposed between said lateral flanges (37, 38), said main wall (66) of said latch (29) and said back (34) of the gutter (45) facing each other; said faces delimiting the accommodation (31) in the immobilization configuration being formed by inside faces of the back (34) of the gutter (45), of the lateral flanges (37, 38) of the gutter (45) and of the latch (29).

14. System according to any one of claims 1 to 13, **characterized in that** said latch (29) is made from a plate of rigid metal cut out and folded.
